(19) Europäisches Patentamt
European Patent Office
Office européen des brevets

(11) EP 0 795 559 B1

(12) **EUROPÄISCHE PATENTSCHRIFT**

(45) Veröffentlichungstag und Bekanntmachung des Hinweises auf die Patenterteilung:
**10.10.2001 Patentblatt 2001/41**

(51) Int Cl.[7]: **C07F 9/50**

(21) Anmeldenummer: **97103610.8**

(22) Anmeldetag: **05.03.1997**

(54) **Substituierte Diphenyldiphosphane und ein Verfahren zu ihrer Herstellung**

Substituted diphenylphosphanes and process for their production

Diphényl phosphanes substitués et procédé pour leur préparation

(84) Benannte Vertragsstaaten:
**CH DE FR GB IT LI**

(30) Priorität: **11.03.1996 DE 19609336**

(43) Veröffentlichungstag der Anmeldung:
**17.09.1997 Patentblatt 1997/38**

(73) Patentinhaber: **Celanese Chemicals Europe GmbH**
**60439 Frankfurt am Main (DE)**

(72) Erfinder:
- **Regnat, Dieter, Dr.**
  **65817 Eppstein (DE)**
- **Kleiner, Hans-Jerg, Dr.**
  **61476 Kronberg (DE)**
- **Bahrmann, Helmut, Dr.**
  **46499 Hamminkeln (DE)**

(56) Entgegenhaltungen:
**EP-A- 0 104 375** **EP-A- 0 571 819**
**EP-A- 0 653 432**

- **JOURNAL OF ORGANOMETALLIC CHEMISTRY, Band 396, 1990 IMRE TOTH et al. "Immobilization of rhodium complexes in aqueous HBF4. The enan- tioselective hydrogenation of prochiral olefins with ((CH3CHP(p-C6H4NMe2H)2CH2CHP-(p-C6H4NMe2H)2CH3)RhNBD)5+" Seiten 363-373**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 795 559 B1

**Beschreibung**

Substituierte Diphenyldiphosphane und ein Verfahren zu ihrer Herstellung

Die vorliegende Erfindung betrifft neue Verbindungen aus der Reihe substituierter Diphenyldiphosphane.

Phosphane haben generell eine vielseitige, technische Anwendung gefunden. Sie eignen sich beispielsweise als Antioxidantien, Metallextraktionsmittel, Flammschutzimprägniermittel, Stabilisierungsmittel für Olefine (US-6-400,168 NTIS); Chem. Abstr. 100; 122286b) und Trioxan (US 4,125,540) Ausgangsverbindungen für Wittig-Reagenzien oder Liganden für Metallkomplexkatalysatoren. Aufgrund ihrer Formenvielfalt stellen sie auch Vorprodukte zur Herstellung weiterer, gegebenenfalls Phosphor enthaltender, organischer Verbindungen dar.

Innerhalb der Gruppe der Phosphane spielen Diphosphane aufgrund ihrer stofflichen Eigenschaften eine herausgehobene Rolle. Da in ihrem Molekül zwei trivalente Phosphoratome enthalten sind, besitzen sie gegenüber zahlreichen Metallen und Metallionen, insbesondere solchen aus der Reihe der Übergangsmetalle, komplexierende Eigenschaften. Die Fähigkeit der Komplexbildung ist auf die Bildung vergleichsweise stabiler Chelate zurückzuführen und kann zur Herstellung entsprechender Metallkomplexkatalysatoren, die in technischen Prozessen Anwendung finden, genutzt werden.

Innerhalb der Gruppe der Diphosphane sind sulfonierte Diphosphane aufgrund ihrer besonderen Eigenschaften von Interesse. Die sulfonierten Diphosphane besitzen ebenfalls zwei trivalente Phosphoratome und sind zudem in Wasser löslich. Derartige sulfonierte Diphosphane sind in der EP 0 571 819 A beschrieben. Es handelt sich bei ihnen um sulfonierte 2,2'-Bis-(diphenylphosphinomethyl)-1,1'-binaphthaline der allgemeinen Formel (A)

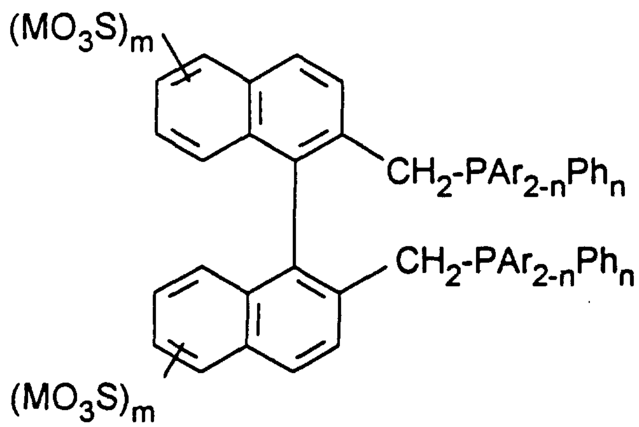

(A)

in der Ar für m-$C_6H_4SO_3M$, M für Wasserstoff, für Ammonium, für ein einwertiges Metall oder das Äquivalent eines mehrwertigen Metalls, Ph für einen Phenylrest steht, m den Wert 1 oder 2 hat und n 0, 1 oder 2 bedeutet. Diese sulfonierten Diphosphane werden in Kombination mit Rhodium als Hydroformylierungskatalysatoren eingesetzt. Aufgrund ihrer Wasserlöslichkeit, die auf den Einbau der Sulfonsäure- oder Sulfonat-Gruppen zurückzuführen ist, eröffnen diese Diphosphane die Möglichkeit, die Hydroformylierung in heterogener Phase durchzuführen. Diese Verfahrensvariante ist besonders zweckmäßig, weil sie einen Weg eröffnet den in Wasser gelösten Katalysator einfach und schonend von dem in Wasser nicht löslichen Reaktionsprodukt abzutrennen.

Als Diphosphan, das für die Herstellung chiraler Komplexe geeignet ist, hat das S,S-2,4-Bis[bis-(p-N,N-dimethylaminophenyl)phosphino]pentan (B) Bedeutung erlangt. Wie von Tóth, Hanson und Davis in Catalysis Letters 5 (1990), 183 bis 188 beschrieben, ist dieses Diphosphan durch Umsetzung von R,R-2,4-Pentandiolditosylat mit einem Phosphid $KP(p\text{-}C_6H_4\text{-}N(CH_3)_2)_2$ nach folgendem Reaktionsschema zugänglich:

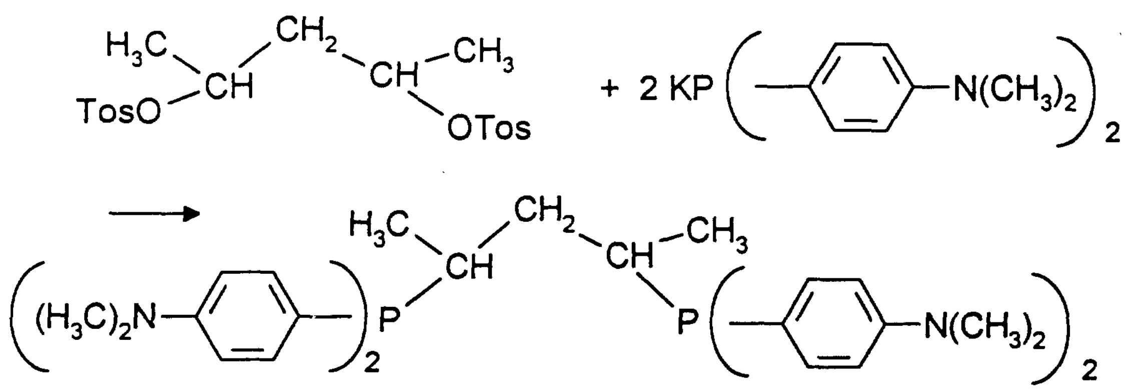

(B)

Setzt man das Diphosphan (B) mit einem Rhodiumkomplex der Formel $(Rh(L_2)Cl)_2$, worin $L_2$ = COD (Cyclooctadien) oder NBD (Norbornadien) ist, um, so erhält man kationische Komplexe vom Typ $[(\text{Diphosphan (B)}) RhL_2]^+$, die durch Protonierung der im Diphosphan (B) enthaltenen Dimethylaminogruppen mittels wäßriger $HBF_4$ in wasserlösliche Komplexe überführt werden (Tóth, Hanson und Davis, J. Organomet. Chem., 396 (1990) 363 bis 373), wobei-wie aus dem Abstract auf Seite 363 hervorgeht - der Rhodiumkomplex $\{[CH_3]CHP(p\text{-}C_6H_4N^+(CH_3)_2H)_2CH_2CHP(p\text{-}C_6H_4N^+(CH_3)_2H)_2CH_3]RhNBD\}^{5+}$ für die enantiöselektive Hydrierung von Zimtsäurederivaten verwendet wird. Die Struktur des mutmaßlichen katalytisch aktiven Zwischenproduktes ist auf Seite 376 abgebildet. Der Rh-Komplex enthält das an allen vier Dimethylaminogruppen protonierte Diphosphan (B) als Chelatliganden, der über die beiden Phosphoratome an das Rhodium gebunden ist.

Bei den beiden zuvor beschriebenen Katalysatoren handelt es sich um solche, die in Wasser löslich sind. Die einen enthalten die wasserlöslichen sulfonierten Diphosphane der Formel (A), die anderen sind wasserlöslich aufgrund der mittels wäßriger $HBF_4$ protonierten Dimethylaminogruppen des an Rhodium in Form eines chelatgebundenen Diphosphans (B).

In Anbetracht der besonderen Bedeutung, die Verbindungen aus der Reihe der Diphosphane generell zukommt, stellt es eine lohnende Aufgabe dar, neue Verbindungen aus dieser Gruppe bereitzustellen, um das Spektrum ihrer Anwendungsmöglichkeiten nicht nur zu ergänzen, sondern auch durch eine Nuancierung stofflicher Eigenschaften und Variation struktureller Merkmale zu bereichern und zu erweitern. Es ist nämlich anzunehmen, daß die chemische Eigenart und der strukturelle Aufbau der Diphosphane einen Einfluß auf Prozesse ausübt, in denen diese Diphosphane als Katalysatorbestandteil verwendet werden. Insbesondere stellt es eine interessante Herausforderung dar, die besonderen Eigenschaften symmetrisch substituierter Diphosphane gegebenenfalls auch mit den vorteilhaften Einflüssen, die auf eine unsymmetrische Substitution und damit auf sterische und/oder elektronische Effekte oder eine zusätzlich entstandene Chiralität zurückgehen, zu vereinen, um auch zu neuen unsymmetrischen Diphosphanen zu gelangen, die einen noch größeren oder andersgearteten Anwendungsbereich als die symmetrisch substituierten Diphosphane umfassen.

Gelöst wird diese Aufgabe durch Verbindungen der allgemeinen Formel (I)

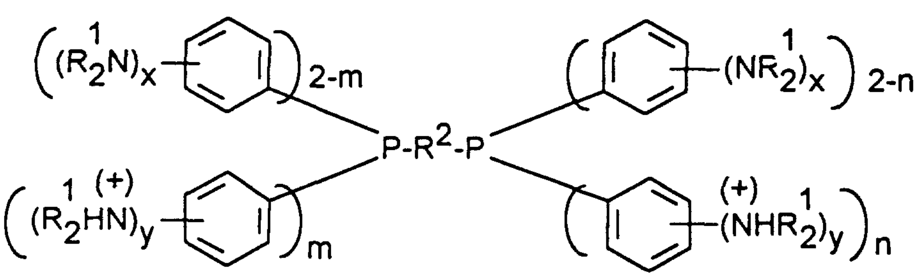

$y(m+n)R^3\text{-}A$ (I)

worin $R^1$ für H oder einen Alkylrest mit 1 bis 12 Kohlenstoffatomen, $R^2$ für einen geradkettigen Alkylenrest mit 1 bis 8 Kohlenstoffatomen, einen Sauerstoff enthaltenden Alkylenrest mit 2 bis 4 Kohlenstoffatomen, einen Rest der Formel (II) oder (III)

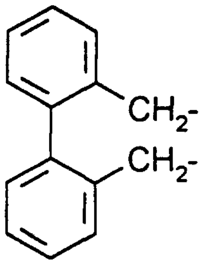 (II) 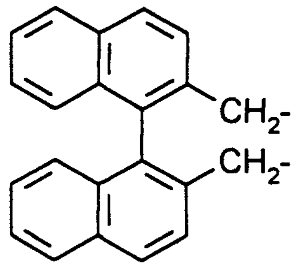 (III)

oder einen Cycloalkylenrest mit 3 bis 10 Kohlenstoffatomen, $R^3$ für einen Alkylrest mit 1 bis 25 Kohlenstoffatomen oder einen Arylrest mit 6 bis 10 Kohlenstoffatomen steht, A einen Rest -COO oder $-SO_3$ darstellt und x = 0, y = 1, m = 1 und n = 1 ist, oder x = 1, y = 1, m = (1 oder 2) und n = (1 oder 2) ist, oder, falls $R^2$ einen Rest der Formel (II) oder (III) darstellt, x = 1, y = 0, m = (0 oder 1) und n = (0 oder 1) ist.

Bei den $-N^+HR^1_2$ Gruppen enthaltenden Verbindungen der allgemeinen Formel (I) handelt es sich um Salze, die sich in Wasser im allgemeinen nicht oder nur im geringen Umfang lösen. Dagegen besitzen sie in organischen Lösungsmitteln trotz ihres Salzcharakters eine gute bis sehr gute Löslichkeit und eignen sich deshalb für einen Einsatz in organischer Phase.

Durch die Verbindungen der Formel (I) wird eine Stoffgruppe zugänglich, die sich auf vergleichsweise einfache Art in breitem Umfang variieren läßt. Zum einen kann der Rest $R^1$, zum anderen der Rest $R^2$ und zum dritten gegebenenfalls der Rest $R^3$ verändert werden, um auf diese Weise die Eigenschaften der resultierenden Verbindungen, insbesondere auch hinsichtlich ihrer Löslichkeit in organischen Lösungsmitteln respektive organischen Medien, im gewünschten Sinne zu beeinflussen.

Die Verbindungen der allgemeinen Formel (I) lassen sich als chelatbildende Liganden verwenden. Sie eignen sich ferner zur Herstellung weiterer gegebenenfalls Phosphor enthaltender Verbindungen. Insbesondere kann man sie als Bestandteil komplexer Katalysatoren für die Hydroformylierung von Olefinen einsetzen. Dies ist Gegenstand einer am gleichen Tag wie die vorliegende Patentanmeldung eingereichten deutschen Patentanmeldung (Aktenzeichen P 19609337.6).

Von Interesse sind die Verbindungen der allgemeinen Formel (I), worin x = 0, y = 1, m = 1 und n = 1 ist oder x = 1, y = 1, m = (1 oder 2) und n = (1 oder 2) ist.

Insbesondere von Interesse sind Verbindungen der allgemeinen Formel (I), worin x = 1, y = 1, m = (1 oder 2) und n = (1 oder 2), insbesondere solche in denen m = 2 und n = 2 ist.

Der Vollständigkeithalber sei erwähnt, daß x und y unabhängig voneinander jeweils für 0 oder 1 und m und n unabhängig voneinander generell für 0, 1 oder 2 stehen können, und x und y einerseits und m und n andererseits voneinander unabhängig sind.

Die $R^1_2N$- und die $R^1_2HN^+$-Gruppe kann eine beliebige Position am Benzolring einnehmen, sie steht insbesondere in der meta-Stellung oder para-Stellung, bevorzugt in der para-Stellung zu der Bindung, die den Benzolring mit dem jeweiligen P-Atom verbindet.

$R^1$ steht, wie zuvor bereits erwähnt, für H oder einen Alkylrest mit 1 bis 12 Kohlenstoffatomen, insbesondere für einen Alkylrest mit 1 bis 4 Kohlenstoffatomen, bevorzugt für einen Methyl- oder Ethylrest.

Von besonderem Interesse sind die Verbindungen der Formel (I), worin $R^1$ für einen Methylrest steht, da sie besonders leicht zugänglich sind.

Der die beiden P-Atome verbindende Rest $R^2$ steht, wie eingangs bereits erläutert, für einen geradkettigen Alkylenrest mit 1 bis 8 Kohlenstoffatomen, einen Sauerstoff enthaltenden Alkylenrest mit 2 bis 4 Kohlenstoffatomen, einen Rest der Formel (II) oder (III)

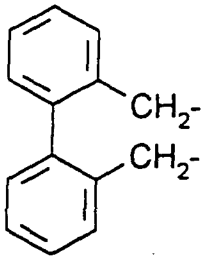 (II) 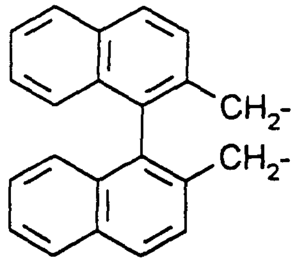 (III)

oder einen Cycloalkylenrest mit 3 bis 10 Kohlenstoffatomen, insbesondere einen Alkylenrest mit 1 bis 4 Kohlenstoffatomen oder einen Rest $-(CH_2)_2-O-(CH_2)_2-$, bevorzugt für einen Trimethylen- oder Tetramethylenrest steht.

Aber auch die Reste der Formel (II) und (III) sind von Bedeutung, da sie den Diphosphanen chirale Eigenschaften verleihen können. Dies ist der Fall, wenn die beiden Benzolringe respektive Naphthylringe nicht in ein und derselben Ebene liegen, sondern um die beide Ringe verknüpfende Bindung verdreht vorliegen und infolge sterischer Hinderung eine freie Rotation um diese Bindung nicht mehr möglich ist. Dies ist mitunter bei vergleichweise großen Resten, die an der $-CH_2$ Gruppe hängen, der Fall. Die in der Formel (I) an $R^2$ befindlichen, das P-Atom einschließenden Reste sind voluminös genug, um auf diese Weise insbesondere den Rest (III) chiral werden zu lassen.

Auf diese Weise erhält man Diphosphane der Formel (I), die eine zusätzlich entstandene Chiralität aufweisen. Chirale Diphosphane erschließen generell einen andersgearteten Anwendungsbereich als symmetrisch substituierte, nichtchirale Diphosphane, der üblicherweise über den nichtchiraler Diphosphane hinausgeht.

Wie zuvor bereits erwähnt, steht der Rest $R^3$ für einen Alkylrest mit 1 bis 25 Kohlenstoffatomen oder einen Arylrest mit 6 bis 10 Kohlenstoffatomen, insbesondere für einen Alkylrest mit 12 bis 24 Kohlenstoffatomen oder einen Arylrest mit 6 bis 7 Kohlenstoffatomen, bevorzugt für einen Alkylrest mit 14 bis 22 Kohlenstoffatomen.

A steht, wie eingangs bereits erläutert, für einen Rest $-COO^-$ oder $-SO_3^-$, insbesondere für einen Rest $-COO^-$.

Ohne Anspruch auf Vollständigkeit seien an dieser Stelle einige geeignete Vertreter der Verbindungen der allgemeinen Formel (I) genannt:

1,4-Bis-(4-dimethylaminophenyl-4-dimethylammoniumphenyl-phosphino)butan-bis-stearat,
1,3-Bis-(4-dimethylaminophenyl-dimethylammoniumphenyl-phosphino)propan-bis-stearat,
1,4-Bis-(4-dimethylaminophenyl-4-dimethylammoniumphenylphosphino)-butan-bis-palmitat,
1,3-Bis[bis(dimethylammoniumphenyl)phosphino]-propan-tetra-palmitat,
2,2'-Bis[bis(dimethylammoniumphenyl)phosphinomethyl]-biphenyl-tetra-palmitat.

Die vorliegende Erfindung betrifft ferner ein Verfahren zur Herstellung der Verbindungen der Formel (I). Es ist dadurch gekennzeichnet, daß man ein Phosphanoxid der Formel (IV) und (V)

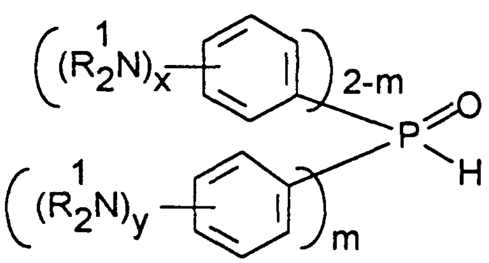

(IV)

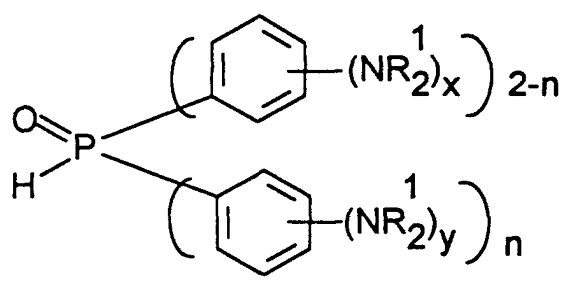

(V)

worin $R^1$, x, y, m und n die vorstehend genannte Bedeutung haben, mit einem Dihalogenid $X-R^2-X$, worin X für Cl oder Br steht und $R^2$ die vorstehend genannte Bedeutung besitzt, mit einer Base in Anwesenheit oder Abwesenheit eines Lösungsmittels bei -20 bis 100°C zu einem Diphosphanoxid der Formel (VI)

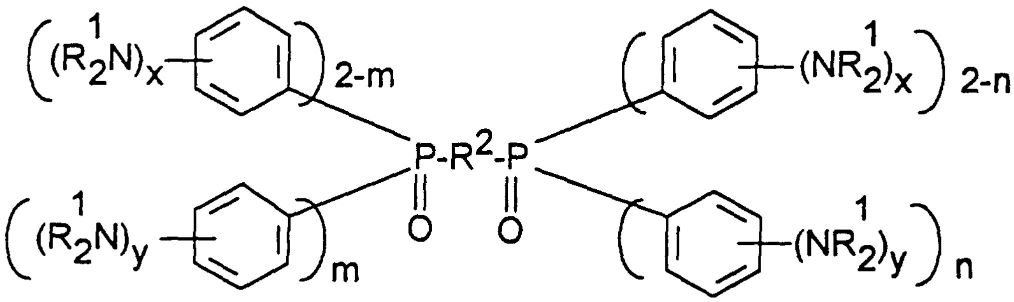

(VI)

umsetzt, das Diphosphanoxid der Formel (VI) in Anwesenheit oder Abwesenheit eines Lösungsmittels mit einem Silan

der Formel $HSiCl_aR_b$, wobei a = (2 oder 3), b = (0 oder 1) und (a + b) = 3 ist und R für einen Methylrest oder Phenylrest steht bei 80 bis 160°C zu einem Diphosphan der Formel (VII)

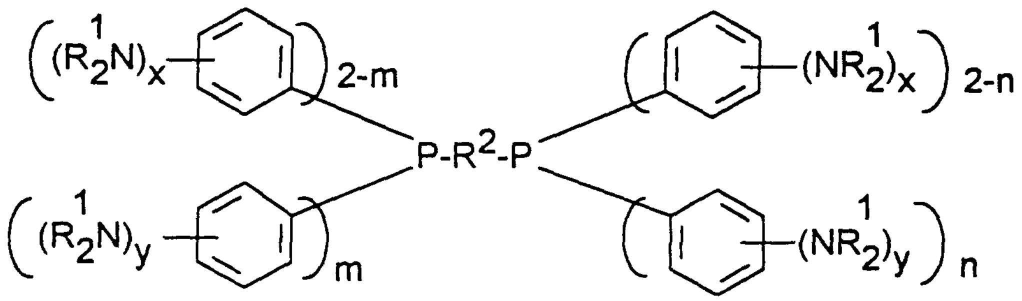

(VII)

reduziert und gegebenenfalls das Diphosphan der Formel (VII) mit einer Säure der Formel R3-A-H, worin $R^3$ und A die vorstehend genannte Bedeutung haben, umsetzt.

Die vorstehend genannte Bedeutung für $R^1$, x, y, m, n, $R^2$, $R^3$ und A ist jeweils in Zusammenhang mit der Beschreibung der Verbindungen der allgemeinen Formel (I) zu entnehmen. Aus diesem Grund wird an dieser Stelle auf eine nochmalige Auflistung der Bedeutung für $R^1$, x, y, m, n, $R^2$, $R^3$ und A verzichtet.

Das erfindungsgemäße Verfahren erweist sich als sehr vielseitig und läßt sich flexibel nutzen. Es erlaubt nämlich in vorteilhafter Weise, den Rest $R^1$ frei, das heißt ohne Rücksicht auf die Reste $R^2$ und $R^3$ nehmen zu müssen, auszuwählen. Gleiches trifft für den Rest $R^2$ zu. Auch dieser Rest kann unabhängig von den Resten $R^1$ und $R^3$ ausgewählt werden. Schließlich läßt sich auch der Rest $R^3$ in die Verbindung der Formel (I) einfügen, ohne durch die vorherige Auswahl von $R^1$ und $R^2$ eingeschränkt zu werden.
Diese Flexibilität des erfindungsgemäßen Verfahrens beruht darauf, daß man einerseits eine freie Auswahl bezüglich der die Reste $R^1$ enthaltenden Phosphanoxide die Formel (IV) und (V), andererseits eine freie Auswahl bezüglich des Dihalogenids der Formel $X\text{-}R^2\text{-}X$ hat und zudem unabhängig von diesen Bausteinen die Verbindung $R^3$-A-H nach Belieben bei der Herstellung einsetzen kann. Dadurch ist ein sehr hohes Maß an Nutzung des Verfahrens gewährleistet und zudem sichergestellt, daß die Verbindungen der Formel (I) in einem sehr breitem Umfang zugänglich gemacht werden.

Man setzt üblicherweise das Phosphanoxid der Formel (IV) und das Dihalogenid $X\text{-}R^2\text{-}X$ im Molverhältnis 1 : (1 bis 5) um und setzt das Reaktionsprodukt, gegebenenfalls nach Abtrennung überschüssig eingesetzten Dihalogenids, anschließend mit dem Phosphanoxid der Formel (V) um. Man erhält auf diese Weise Diphosphanoxide der Formel (VI), die zwei unterschiedliche Phospanoxidreste enthalten.

In einer Vielzahl von Fällen genügt es, das Dihalogenid $X\text{-}R^2\text{-}X$ mit dem Phosphanoxid der Formel (IV) oder mit dem Phosphanoxid der Formel (V) im Molverhältnis 1 : (2 bis 2,2) umzusetzen. Man gelangt hierbei zu Diphosphanoxiden, die zwei gleiche Phosphanoxidreste aufweisen. Bei der Umsetzung des Phosphanoxids der Formel (IV) und (V) mit dem Dihalogenid arbeitet man unter Zugabe einer Base, um den bei dieser Reaktion freiwerdenden Halogenwasserstoff, nämlich HCl bzw. HBr, zu binden. Als Base kann man eine Verbindung MeH, worin Me für Li, Na oder K steht, oder eine Verbindung LiR', worin R' für einen Alkylrest mit 1 bis 4 Kohlenstoffatomen oder einen Phenylrest steht, einsetzen. Es lassen sich auch Gemische der vorstehend aufgeführten Basen einsetzen.
Wie bereits erwähnt wird das Diphosphanoxid der Formel (VI) in Anwesenheit oder Abwesenheit eines Lösungsmittels mit einem Silan der Formel $HSiCl_aR_b$, worin a und b die vorstehend Bedeutung hat, insbesondere mit einem Silan der Formel $HSiCl_2R$, worin R für einen Methylrest oder Phenylrest steht, bei einer Temperatur von 100 bis 150°C reduziert. Man kann zwar diese Reduktion auch bei höheren und tieferen Temperaturen durchführen, es hat sich jedoch für eine Vielzahl von Fällen der Temperaturbereich von 100 bis 150°C als zweckmäßig und ausreichend erwiesen.

Man führt die Reduktion des Diphosphanoxids der Formel (VI) vorzugsweise in Anwesenheit eines Lösungsmittels durch. Üblicherweise verwendet man hierfür ein organisches Lösungsmittel, das sich unter den Bedingungen der Reduktion inert verhält. Ohne Anspruch auf Vollständigkeit zu erheben, seien Acetonitril, Toluol oder Xylol als Lösungsmittel genannt.

Nach der Reduktion des Diphosphanoxids der Formel (VI) erhält man ein Diphosphan der Formel (VII), das in unveränderter Form unmittelbar als chelatbildender Ligand verwendet werden kann. Üblicherweise setzt man es allerdings als Ausgangsstoff für die $-N^+HR^1_2$Gruppen enthaltenden Verbindungen der Formel (I) ein. Zu diesem Zweck setzt man das Diphosphan der Formel (VII) mit einer Verbindung der Formel $R^3$-A-H, worin $R^3$ für einen Alkylrest von 1 bis 25, insbesondere 12 bis 24, bevorzugt 14 bis 22 Kohlenstoffatomen oder einen Arylrest mit 6 bis 10, insbesondere 6 bis 7 Kohlenstoffatomen und A für eine $-COO^-$ oder $-SO_3^-$, insbesondere $-COO^-$ Gruppe steht, um und protoniert

somit eine oder mehrere oder sämtliche der im Diphosphan der Formel (VII) vorhandenen $-NR^1_2$ Gruppen.

Man setzt das Diphosphan der Formel (VII) und die Verbindung $R^3$-A-H, also die protonierende Säure, in einem Verhältnis ein, daß je Äquivalent der zu protonierenden $-NR^1_2$ Gruppen 1 bis 2, insbesondere 1 bis 1,5, bevorzugt 1 bis 1,1 Mol der Verbindung $R^3$-A-H angewendet werden.

Während Tóth in J. Organomet. Chem. 396 (1990) auf Seite 367 unter dem Punkt "conclusions" ausführt, daß ein zehnfacher Überschuß an $HBF_4$ erforderlich ist, um die vier Dimethylaminogruppen des an Rhodium in Form eines Chelats komplex gebundenen Diphosphans (B) vollständig zu protonieren, erscheint es als überraschend, daß die Protonierung des nicht komplexgebundenen Diphosphans (VII) selbst bei Anwendung im Vergleich zu $HBF_4$ schwächeren Säuren ohne nennenswerte Probleme verläuft und zudem eine Protonierung der beiden Phosphoratome weitgehend oder nahezu vollständig vermieden werden kann. Eine Protonierung der beiden Phosphoratome würde nämlich dazu führen, daß das Diphosphan seine Fähigkeit, Chelate zu bilden, verlieren und demzufolge sich nicht mehr als Ligand oder Bestandteil von Metallkomplexkatalysatoren eignen würde.

Das erfindungsgemäße Verfahren läßt sich kontinuierlich oder diskontinuierlich ausführen. Es eignet sich insbesondere für eine diskontinuierliche Arbeitsweise. Das erfindungsgemäße Verfahren kann man unter Atmosphärendruck, unter reduziertem Druck oder Überdruck ausführen. Üblicherweise arbeitet man unter Atmosphärendruck oder unter dem sich unter den jeweiligen Reaktionsbedingungen ausbildenden Reaktionsdruck.

Die nachfolgenden Beispiele beschreiben die Erfindung näher, ohne sie hierauf zu beschränken.

Experimenteller Teil

Beispiel 1

1a) Herstellung von 1,4-Bis-[bis-(4-dimethylaminophenyl)phosphinyl]butan

In einer Argonatmosphäre werden unter Rühren 14,42 g (50 mMol) Bis-(4-dimethylaminophenyl)-phosphanoxid in 100 ml trockenem Tetrahydrofuran vorgelegt und bei 25°C mit 32 ml einer 1,6-molaren Lösung von n-Butyllithium in Hexan (50 mMol) tropfenweise versetzt. Man rührt 2,5 Stunden bei 25°C und tropft dann 5,4 g (25 mMol) 1,4-Dibrombutan zu. Anschließend rührt man 2 Stunden bei 25°C und tropft dann 30 ml Wasser zu. Der gebildete Feststoff wird abfiltriert und aus Acetonitril umkristallisiert.

Man erhält 12,5 g farblose Kristalle, entsprechend einer Ausbeute von 79 %.

$^{31}P$-NMR ($CD_3OD$): $\delta$ = 39,2 ppm

1b) Herstellung von 1,4-Bis-[bis-(4-dimethylaminophenyl)phosphino]butan

In einer Argonatmosphäre werden unter Rühren 6,1 g (10 mMol) 1,4-Bis-[bis-(4-dimethylaminophenyl)phosphinyl]butan und 9,3 g (50 mMol) Tri-n-butylamin in 30 ml o-Xylol vorgelegt. Man tropft 5,75 g (50 mMol) Methyldichlorsilan langsam zu, wobei sich das Reaktionsgemisch auf 50°C erwärmt. Anschließend erwärmt man auf 100°C und rührt 4 Stunden, danach erwärmt man auf 145°C und rührt 16 Stunden. Aus der klaren Lösung kristallisieren beim Abkühlen farblose Kristalle, die abfiltriert und mit 10 ml entgastem o-Xylol gewaschen werden.

Nach Trocknen im Hochvakuum erhält man 5,5 g farblose Kristalle, entsprechend einer Ausbeute von 95 %.

$^{31}P$-NMR ($CDCl_3$): $\delta$ = -19,9 ppm

1c) Herstellung eines Bis-Palmitinsäure-salzes von 1,4-Bis-[bis-(4-dimethylaminophenyl)phosphino]butan

In einer Argonatmosphäre werden unter Rühren 3,5 g (6,05 mMol) 1,4-Bis-[bis-(4-dimethylaminophenyl)phosphino]butan in 20 ml trockenem entgasten o-Xylol vorgelegt und mit 3,1 g (12,5 mMol) Palmitinsäure versetzt. Man erwärmt 2 Stunden auf 100°C und kühlt anschließend auf 25°C ab. Nach Abfiltrieren, Waschen mit Xylol und Trocknen im Hochvakuum erhält man 6,9 g farblose Kristalle.

$C_{68}H_{112}N_4O_4B_2$

| | | | | | |
|---|---|---|---|---|---|
| berechnet | C 71,5 % | H 9,9 % | N 4,9 % | O 5,6 % | P 5,6 % |
| gefunden | C 71,4 % | H 9,8 % | N 5,0 % | O 5,7 % | P 5,5 % |

$^{31}P$-NMR ($CDCl_3$): $\delta$ = -19,9 ppm.

Beispiel 2

2a) Herstellung von 1,3-Bis-[bis-(4-dimethylaminophenyl)phosphinyl]propan

In einer Argonatmosphäre werden unter Rühren 14,42 g (50 mMol) Bis-(4-dimethylaminophenyl)-phosphanoxid in 100 ml trockenem Tetrahydrofuran vorgelegt und bei 25°C mit 32 ml einer 1,6-molaren Lösung von n-Butyllithium in Hexan (50 mMol) tropfenweise versetzt. Man rührt 2,5 Stunden bei 25°C und tropft dann 5,05 g (25 mMol) 1,3-Dibrompropan zu. Anschließend rührt man 2 Stunden bei 25°C und tropft dann 30 ml Wasser zu. Man destilliert das Lösungsmittel im Vakuum ab und extrahiert den Rückstand mit 100 ml Dichlormethan/50 ml Wasser. Die organische Phase wird abgetrennt, mit Magnesiumchlorid getrocknet und im Vakuum eingeengt. Dabei fällt ein farbloses Kristallgut an, das aus Acetonitril umkristallisiert wird.
Man erhält 12,3 g farblose Kristalle, entsprechend einer Ausbeute von 78 %.
$^{31}$P-NMR ($CDCl_3$): $\delta$ = 33,5 ppm.

2b) Herstellung von 1,3-Bis-[bis-(4-dimethylaminophenyl)phosphino]propan

In einer Argonatmosphäre werden unter Rühren 12,0 g (19,5 mMol) 1,3-Bis-[bis-(4-dimethylaminophenyl) phosphinyl]propan und 24 ml (100 mMol) Tri-n-butylamin in 80 ml o-Xylol vorgelegt. Es werden 14,4 ml (100 mMol) Phenyldichlorsilan langsam zugetropft. Man erwärmt auf 145°C, rührt 6 Stunden und destilliert das Lösungsmittel im Vakuum ab. Aus der klaren Lösung kristallisieren beim Abkühlen farblose Kristalle, die abfiltriert werden. Man suspendiert die erhaltenen Kristalle in 100 ml entgastem o-Xylol und extrahiert mit 20 ml 2N Natronlauge. Die organische Phase wird abgetrennt, mit Natriumsulfat getrocknet und im Vakuum eingeengt.
Man erhält 10,8 g farblosen Feststoff, entsprechend einer Ausbeute von 95 %.
$^{31}$P-NMR ($CDCl_3$): $\delta$ = -21,2 ppm.

2c) Herstellung eines Tetra-Palmitinsäure-Salzes von 1,3-Bis-[bis-(4-dimethylaminophenyl)phosphino]propan

In einer Argonatmosphäre werden unter Rühren 2,9 g (5 mMol) 1,3-Bis-[bis-(4-dimethylaminophenyl)phosphino]propan in 20 ml trockenem, entgastem o-Xylol vorgelegt und mit 5,1 g (20 mMol) Palmitinsäure versetzt. Man erwärmt auf 100°C, rührt 2 Stunden und kühlt anschließend auf 25°C ab und engt im Vakuum bis zur Trockne ein.
Man erhält 8,0 g farblose Kristalle.
$C_{99}H_{174}N_4O_8P_2$ (1612,48)

| | | | | | |
|---|---|---|---|---|---|
| berechnet | C 73,7 % | H 10,9 % | N 4,0 % | O 7,9 % | P 3,9 % |
| gefunden | C 73,7 % | H 10,8 % | N 4,1 % | O 7,9 % | P 3,9 % |

$^{31}$P-NMR ($CDCl_3$): $\delta$ = -21,2 ppm.

Beispiel 3

3a) Herstellung von 2,2'-Bis-(phenyl-4-dimethylaminophenyl-phosphinylmethyl)-1,1'-binaphthyl

Zu einer auf 130°C erwärmten Lösung von 22,01 g (50 mMol) 2,2'-Bis-brommethyl-1,1'-binaphthyl in 120 ml o-Xylol werden innerhalb von einer Stunde 28,7 g (105 mMol) Phenyl-4-dimethylaminophenyl-phosphinigsäureethylester zugetropft. Man rührt 4 Stunden bei 140°C, kühlt auf 20°C ab und filtriert den ausgefallenen Feststoff ab.
Man erhält 28,1 g farblose Kristalle, entsprechend einer Ausbeute von 73 %.
$^{31}$P-NMR ($CDCl_3$): $\delta$ = 30,6, 30,5 ppm.

3b) Herstellung von 2,2'-Bis-(phenyl-4-dimethylaminophenyl-phosphinomethyl)-1,1'-binaphthyl

In einer Argonatmosphäre werden unter Rühren 19,87 g (25,8 mMol) 2,2'-Bis-(phenyl-4-dimethylaminophenyl-phosphinylmethyl)-1,1'-binaphthyl und 15,5 ml (66 mMol) Tributylamin in 80 ml entgastem, trockenen o-Xylol vorgelegt und mit 9,4 ml (65 mMol) Phenyldichlorsilan tropfenweise versetzt. Man erhitzt anschließend 7 Stunden unter Rühren auf 145°C. Man kühlt das Reaktionsgemisch ab, versetzt mit 50 ml entgaster 32 %iger Natronlauge und trennt die Phasen. Die organische Phase wird eingeengt, der dabei anfallende Rückstand abfiltriert und aus Acetonitril umkristallisiert.
Man erhält 14,3 g farblose Kristalle, entsprechend einer Ausbeute von 75 %.

$^{31}P$-NMR ($CDCl_3$): δ = -12,6, -14,4 ppm.

3c) Herstellung eines Bis-Palmitinsäure-Salzes von 2,2'-Bis-(phenyl-4-dimethylaminophenyl-phosphinomethyl)-1,1'-binaphthyl

In einer Argonatmosphäre werden 4,44 g (6,05 mMol) 2,2'-Bis-(phenyl-4-dimethylaminophenyl-phosphinomethyl)-1,1'-binapthyl in 20 ml trockenem, entgasten o-Xylol vorgelegt und unter Rühren mit 3,1 g (12,1 mMol) Palmitinsäure versetzt. Man erwärmt anschließend 2 Stunden auf 100°C und kühlt danach auf 25°C ab. Das Lösungsmittel wird im Hochvakuum vollständig abdestilliert.
Man erhält 7,54 g einer farblosen Substanz.
$^{31}P$-NMR ($CDCl_3$): δ = -12,6, -14,4 ppm

**Patentansprüche**

1. Verbindungen der allgemeinen Formel (I)

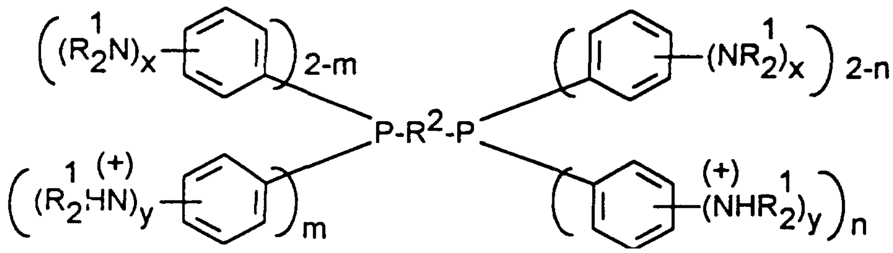

$y(m+n)R^3$-A (I)

worin $R^1$ für H oder einen Alkylrest mit 1 bis 12 Kohlenstoffatomen, $R^2$ für einen geradkettigen Alkylenrest mit 1 bis 8 Kohlenstoffatomen, einen Sauerstoff enthaltenden Alkylenrest mit 2 bis 4 Kohlenstoffatomen, einen Rest der Formel (II) oder (III)

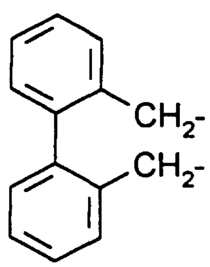 (II) 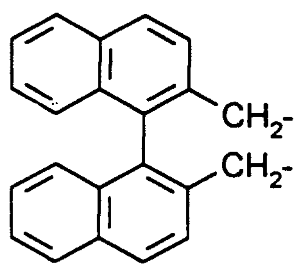 (III)

oder einen Cycloalkylenrest mit 3 bis 10 Kohlenstoffatomen, $R^3$ für einen Alkylrest mit 1 bis 25 Kohlenstoffatomen oder einen Arylrest mit 6 bis 10 Kohlenstoffatomen steht, A einen Rest $-COO^-$ oder $-SO_3^-$ darstellt und x = O, y = 1, m = 1 und n = 1 ist, oder x = 1, y = 1, m = (1 oder 2) und n = (1 oder 2) ist, oder, falls $R^2$ einen Rest der Formel (II) oder (III) darstellt, x = 1, y = 0, m = (0 oder 1) und n = (0 oder 1) ist.

2. Verbindungen nach Anspruch 1, **dadurch gekennzeichnet, daß** x = 0, y = 1, m = 1 und n = 1 ist oder x = 1, y = 1, m = ( 1 oder 2) und n = (1 oder 2) ist.

3. Verbindungen nach Anspruch 1 oder 2, **dadurch gekennzeichnet, daß** x = 1, y = 1, m = (1 oder 2) und n = (1 oder 2) ist.

4. Verbindungen nach einem oder mehreren der Ansprüche 1 bis 3, **dadurch gekennzeichnet, daß** die $R^1_2$ N- und die $R^1_2HN^+$-Gruppe in meta- oder para-Stellung zu der Bindung, die den Benzolring mit dem jeweiligen P-Atom verbindet, steht.

5. Verbindungen nach einem oder mehreren der Ansprüche 1 bis 4, **dadurch gekennzeichnet, daß** die $R^1_2$N- und

die $R_2^1$ $HN^+$-Gruppe in para-Stellung zu der Bindung, die den Benzolring mit dem jeweiligen P-Atom verbindet, steht.

**6.** Verbindungen nach einem oder mehreren der Ansprüche 1 bis 5, **dadurch gekennzeichnet, daß** $R^1$ für einen Alkylrest mit 1 bis 4 Kohlenstoffatomen steht.

**7.** Verbindungen nach einem oder mehreren der Ansprüche 1 bis 6, **dadurch gekennzeichnet, daß** $R^1$ für einen Methyl- oder Ethylrest steht.

**8.** Verbindungen nach einem oder mehreren der Ansprüche 1 bis 7, **dadurch gekennzeichnet, daß** $R^1$ für einen Methylrest steht.

**9.** Verbindungen nach einem oder mehreren der Ansprüche 1 bis 8, **dadurch gekennzeichnet, daß** $R^2$ für einen Alkylenrest mit 1 bis 4 Kohlenstoffatomen oder einen Rest $-(CH_2)_2-O-(CH_2)_2-$ steht.

**10.** Verbindungen nach einem oder mehreren der Ansprüche 1 bis 9, **dadurch gekennzeichnet, daß** $R^2$ für einen Trimethylen- oder Tetramethylenrest steht.

**11.** Verbindungen nach einem oder mehreren der Ansprüche **1** bis **10, dadurch gekennzeichnet, daß** $R^3$ für einen Alkylrest mit **12** bis **24** Kohlenstoffatomen oder einen Arylrest mit **6** bis **7** Kohlenstoffatomen steht.

**12.** Verbindungen nach einem oder mehreren der Ansprüche **1** bis **11, dadurch gekennzeichnet, daß** $R^3$ für einen Alkylrest mit **14** bis **22** Kohlenstoffatomen steht.

**13.** Verbindungen nach einem oder mehreren der Ansprüche 1 bis 12, **dadurch gekennzeichnet, daß** A für einen Rest $-COO^-$ steht.

**14.** Verfahren zur Herstellung der Verbindungen der Formel (I) nach einem oder mehreren der Ansprüche 1 bis 13, **dadurch gekennzeichnet, daß** man ein Phosphanoxid der Formel (IV) und (V)

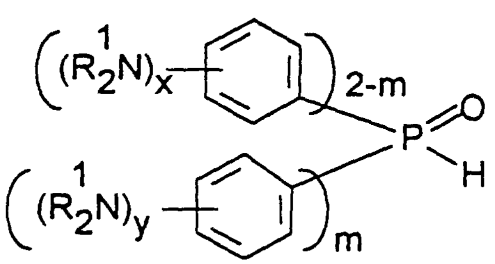

(IV)

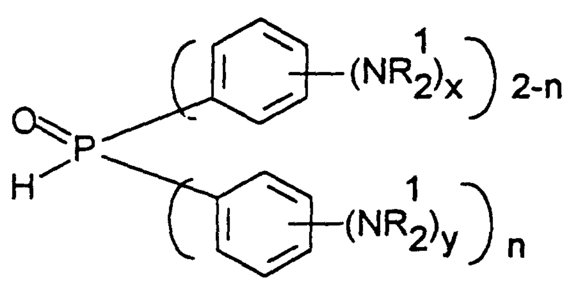

(V)

worin $R^1$, x, y, m und n die vorstehend genannte Bedeutung haben, mit einem Dihalogenid $X-R^2-X$, worin X für Cl oder Br steht und $R^2$ die vorstehend genannte Bedeutung besitzt, mit einer Base in Anwesenheit oder Abwesenheit eines Lösungsmittels bei -20 bis 100°C zu einem Diphosphanoxid der Formel (VI)

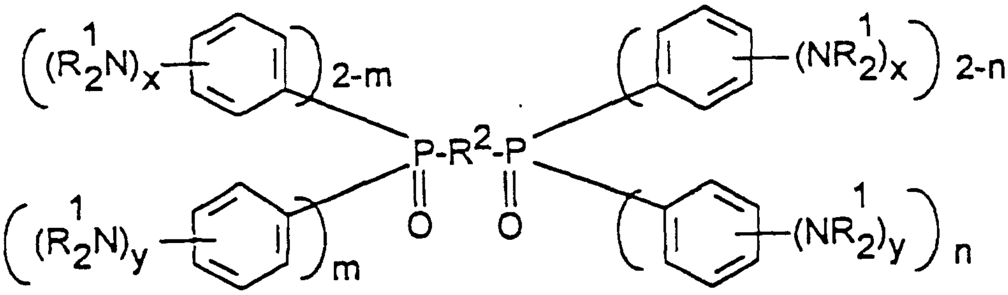

(VI)

umsetzt, das Diphosphanoxid der Formel (VI) in Anwesenheit oder Abwesenheit eines Lösungsmittels mit einem Silan der Formel $HSiCl_aR_b$, wobei a = (2 oder 3), b = (0 oder 1) und (a + b) = 3 ist und R für einen Methylrest oder Phenylrest steht bei 80 bis 160°C zu einem Diphosphan der Formel (VII)

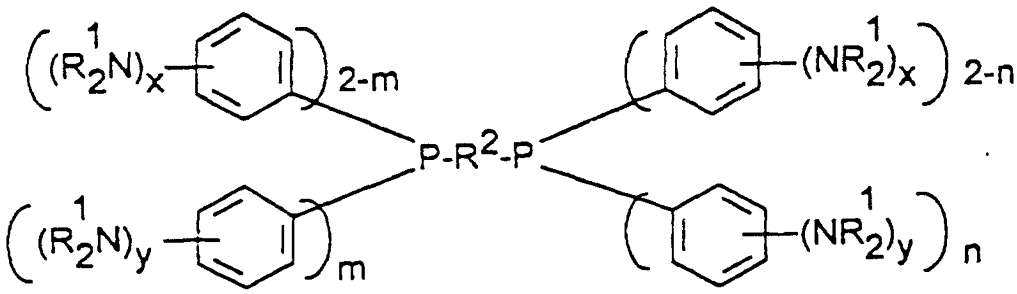

(VII)

reduziert und gegebenenfalls das Diphosphan der Formel (VII) mit einer Säure der Formel $R^3$-A-H, worin $R^3$ und A die vorstehend genannte Bedeutung haben, umsetzt.

**15.** Verfahren nach Anspruch 14, **dadurch gekennzeichnet, daß** man das Phosphanoxid der Formel (IV) und das Dihalogenid X-$R^2$-X im Molverhältnis 1 : (1 bis 5) umsetzt und das Reaktionsprodukt, gegebenenfalls nach Abtrennung überschüssig eingesetzten Dihalogenids, anschließend mit dem Phosphanoxid der Formel (V) umsetzt.

**16.** Verfahren nach Anspruch 14 oder 15, **dadurch gekennzeichnet, daß** man das Dihalogenid X-$R^2$-X mit dem Phosphanoxid der Formel (IV) oder mit dem Phosphanoxid der Formel (V) im Molverhältnis 1 : (2 bis 2,2) umsetzt.

**17.** Verfahren nach einem oder mehreren der Ansprüche 14 bis 16, **dadurch gekennzeichnet, daß** man als Base eine Verbindung MeH, worin Me für Li, Na oder K steht, oder eine Verbindung LiR', worin R' für einen Alkylrest mit 1 bis 4 Kohlenstoffatomen oder einen Phenylrest steht, einsetzt.

**18.** Verfahren nach einem oder mehreren der Ansprüche 14 bis 17, **dadurch gekennzeichnet, daß** man das Diphosphanoxid der Formel (VI) mit einem Silan der Formel $HSiCl_2R$, worin R für einen Methylrest oder Phenylrest steht, bei einer Temperatur von 100 bis 150°C reduziert.

**19.** Verfahren nach einem oder mehreren der Ansprüche 14 bis 18, **dadurch gekennzeichnet, daß** man als Lösungsmittel Acetonitril, Toluol oder Xylol einsetzt.

## Claims

**1.** A compound of the formula (I)

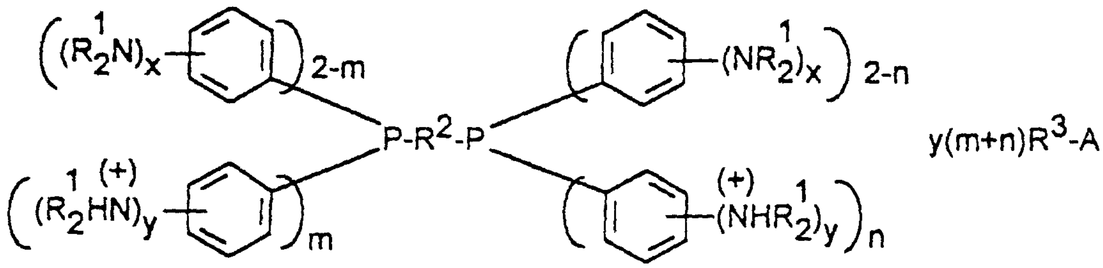

(I)

where $R^1$ is H or an alkyl radical having from 1 to 12 carbon atoms, $R^2$ is a straightchain alkylene radical having from 1 to 8 carbon atoms, an oxygen-containing alkylene radical having from 2 to 4 carbon atoms, a radical of the formula (II) or (III)

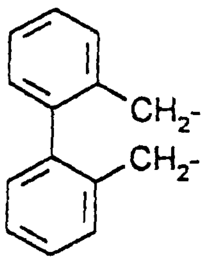

(II)

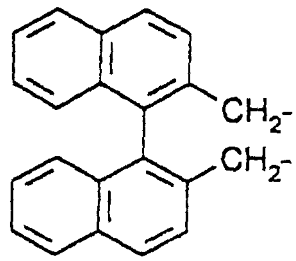

(III)

or a cycloalkylene radical having from 3 to 10 carbon atoms, $R^3$ is an alkyl radical having from 1 to 25 carbon atoms or an aryl radical having from 6 to 10 carbon atoms, A is a radical $-COO^-$ or $-SO_3^-$ and x = 0, y = 1, m = 1 and n = 1, or x = 1, y = 1, m = (1 or 2) and n = (1 or 2), or, if $R^2$ is a radical of the formula (II) or (III), x = 1, y = 0, m = (0 or 1) and n = (0 or 1).

**2.** A compound as claimed in claim 1, wherein x = 0, y = 1, m = 1 and n = 1 or x = 1, y = 1, m = (1 or 2) and n = (1 or 2).

**3.** A compound as claimed in claim 1 or 2, wherein x = 1, y = 1, m = (1 or 2) and n=(1 or 2).

**4.** A compound as claimed in one or more of claims 1 to 3, wherein the $R_2^1N$-and $R_2^1HN^+$- groups are in the meta or para position to the bond which connects the benzene ring to the respective P atom.

**5.** A compound as claimed in one or more of claims 1 to 4, wherein the $R_2^1N$-and $R_2^1HN^+$- groups are in the para position to the bond which connects the benzene ring to the respective P atom.

**6.** A compound as claimed in one or more of claims 1 to 5, wherein $R^1$ is an alkyl radical having from 1 to 4 carbon atoms.

**7.** A compound as claimed in one or more of claims 1 to 6, wherein $R^1$ is a methyl or ethyl radical.

**8.** A compound as claimed in one or more of claims 1 to 7, wherein $R^1$ is a methyl radical.

**9.** A compound as claimed in one or more of claims 1 to 8, wherein $R^2$ is an alkylene radical having from 1 to 4 carbon atoms or a radical $-(CH_2)_2-O-(CH_2)_2-$.

**10.** A compound as claimed in one or more of claims 1 to 9, wherein $R^2$ is a trimethylene or tetramethylene radical.

**11.** A compound as claimed in one or more of claims 1 to 10, wherein $R^3$ is an alkyl radical having from 12 to 24 carbon atoms or an aryl radical having 6 or 7 carbon atoms.

**12.** A compound as claimed in one or more of Claims 1 to 11, wherein $R^3$ is an alkyl radical having from 14 to 22 carbon atoms.

**13.** A compound as claimed in one or more of Claims 1 to 12, wherein A is a radical $-COO^-$.

**14.** A process for preparing the compounds of the formula (I) as claimed in one or more of claims 1 to 13, which comprises reacting a phosphine oxide of the formula (IV) or (V)

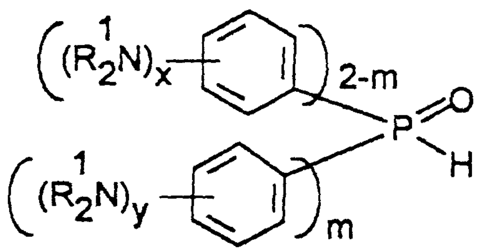

(IV)

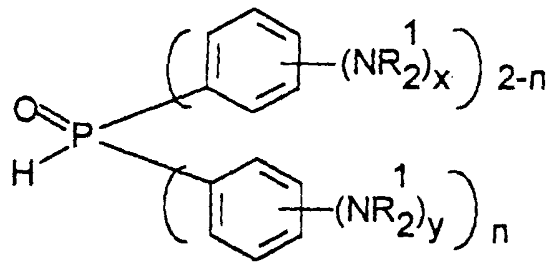

(V)

where $R^1$, x, y, m and n are as defined above, with a dihalide $X-R^2-X$, where X is Cl or Br and $R^2$ is as defined above, with a base in the presence or absence of a solvent at from -20 to 100°C to give a diphosphine oxide of the formula (VI)

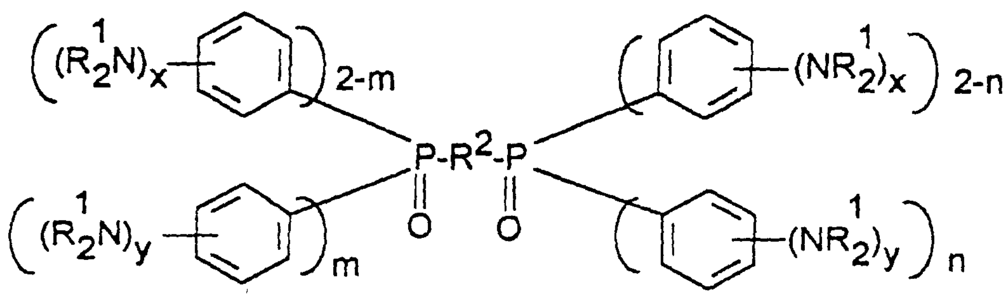

(VI)

reducing the diphosphine oxide of the formula (VI) in the presence or absence of a solvent with a silane of the formula $HSiCl_aR_b$, where a = (2 or 3), b = (0 or 1) and (a + b) = 3 and R is a methyl radical or a phenyl radical, at from 80 to 160°C to give a diphosphine of the formula (VII)

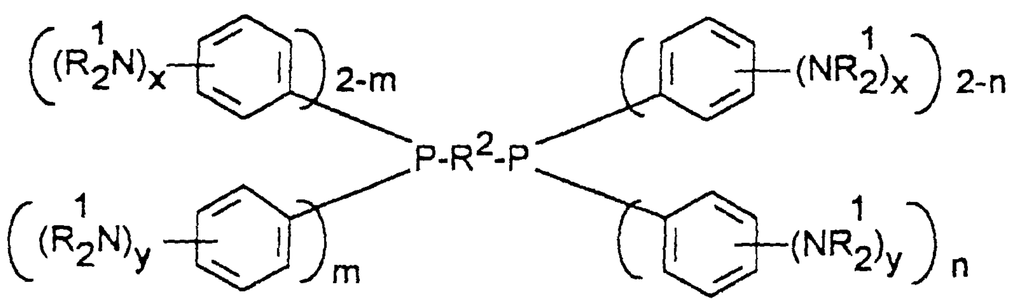

(VII)

and, if desired, reacting the diphosphine of the formula (VII) with an acid of the formula $R^3-A-H$, where $R^3$ and A are as defined above.

**15.** The process as claimed in claim 14, wherein the phosphine oxide of the formula (IV) and the dihalide $X-R^2-X$are reacted in a molar ratio of 1:(1 to 5) and the reaction product, if desired after separating off excess dihalide, is subsequently reacted with the phosphine oxide of the formula (V).

**16.** The process as claimed in claim 14 or 15, wherein the dihalide $X-R^2-X$ is reacted with the phosphine oxide of the

formula (IV) or with the phosphine oxide of the formula (V) in a molar ratio of 1:(2 to 2.2).

**17.** The process as claimed in one or more of claims 14 to 16, wherein the base used is a compound MeH, where Me is Li, Na or K, or a compound LiR', where R' is an alkyl radical having from 1 to 4 carbon atoms or a phenyl radical.

**18.** The process as claimed in one or more of claims 14 to 17, wherein the diphosphine oxide of the formula (VI) is reduced with a silane of the formula $HSiCl_2R$, where R is a methyl radical or phenyl radical, at a temperature from 100 to 150°C.

**19.** The process as claimed in one or more of claims 14 to 18, wherein acetonitrile, toluene or xylene is used as solvent.

**Revendications**

**1.** Composés de formule générale (I)

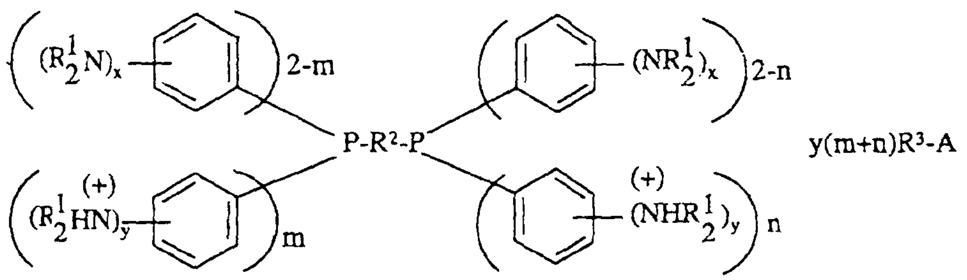

(I)

où $R^1$ représente H ou un reste alkyle de 1 à 12 atomes de carbone, $R^2$ représente un reste alkylène linéaire de 1 à 8 atomes de carbone, un reste alkylène de 2 à 4 atomes de carbone contenant de l'oxygène, un reste de formule (II) ou (III)

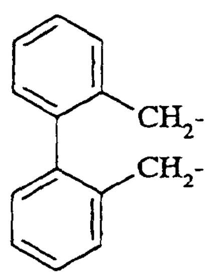

(II)

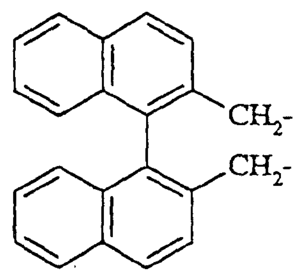

(III)

ou un reste cycloalkylène de 3 à 10 atomes de carbone, $R^3$ représente un reste alkyle de 1 à 25 atomes de carbone ou un reste aryle de 6 à 10 atomes de carbone, A représente un reste $-COO^-$ ou $-SO_3^-$ et x = 0, y = 1, m = 1 et n = 1, ou bien x = 1, y = 1, m = (1 ou 2) et n = (1 ou 2), ou bien, si $R^2$ représente un reste de formule (II) ou (III), x = 1, y = 0, m = (0 ou 1) et n = (0 ou 1).

**2.** Composés selon la revendication 1, **caractérisés en ce que** x = 0, y = 1, m = 1 et n = 1 ou bien x = 1, y = 1, m = (1 ou 2) et n = (1 ou 2).

**3.** Composés selon la revendication 1 ou 2, **caractérisé en ce que** x = 1, y = 1, m = (1 ou 2) et n = (1 ou 2).

**4.** Composés selon une ou plusieurs des revendications 1 à 3, **caractérisés en ce que** le groupe $R^1_2N$- et le groupe $R^1_2HN^+$- sont situés en position méta ou para par rapport à la liaison qui lie le cycle benzénique à l'atome de P correspondant.

**5.** Composés selon une ou plusieurs des revendications 1 à 4, **caractérisés en ce que** le groupe $R^1_2N$ - et le groupe $R^1_2HN^+$ - sont situés en position para par rapport à la liaison qui lie le cycle benzénique à l'atome de P correspondant.

**6.** Composés selon une ou plusieurs des revendications 1 à 5, **caractérisés en ce que** $R^1$ représente un reste alkyle de 1 à 4 atomes de carbone.

**7.** Composés selon une ou plusieurs des revendications 1 à 6, **caractérisés en ce que** $R^1$ représente un reste méthyle ou éthyle.

**8.** Composés selon une ou plusieurs des revendications 1 à 7, **caractérisés en ce que** $R^1$ représente un reste méthyle.

**9.** Composés selon une ou plusieurs des revendications 1 à 8, **caractérisés en ce que** $R^2$ représente un reste alkylène de 1 à 4 atomes de carbone ou un reste $-(CH_2)_2-O-(CH_2)_2-$.

**10.** Composés selon une ou plusieurs des revendications 1 à 9, **caractérisés en ce que** $R^2$ représente un reste triméthylène ou tétraméthylène.

**11.** Composés selon une ou plusieurs des revendications 1 à 10, **caractérisés en ce que** $R^3$ représente un reste alkyle de 12 à 24 atomes de carbone ou un reste aryle de 6 à 7 atomes de carbone.

**12.** Composés selon une ou plusieurs des revendications 1 à 11, **caractérisés en ce que** $R^3$ représente un reste alkyle de 14 à 22 atomes de carbone.

**13.** Composés selon une ou plusieurs des revendications 1 à 12, **caractérisés en ce que** A représente un reste $-COO^-$.

**14.** Procédé de préparation des composés de formule (I) selon une ou plusieurs des revendications 1 à 13, **caractérisé en ce que** l'on convertit un oxyde de phosphane des formules (IV) et (V)

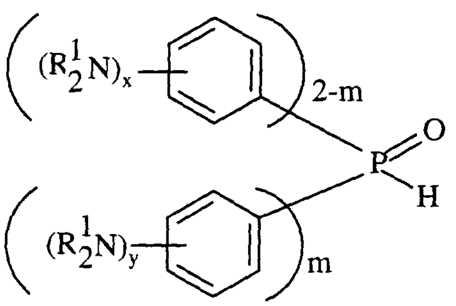

(IV)

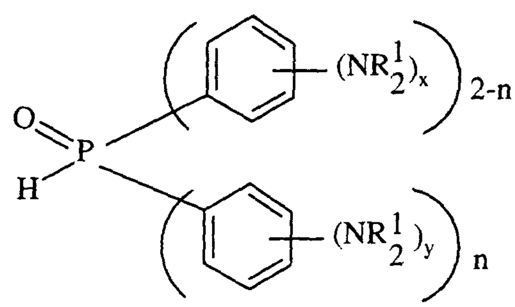

(V)

où $R^1$, x, y, m et n ont la signification citée précédemment, avec un dihalogénure $X-R^2-X$ où X représente Cl ou Br et $R^2$ possède la signification citée précédemment, avec une base en présence ou en l'absence d'un solvant à -20 à 100°C en un oxyde de diphosphane de formule (VI)

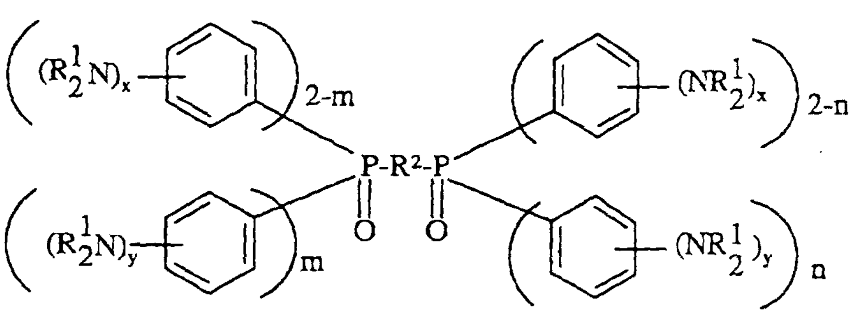

(VI)

on réduit l'oxyde de diphosphane de formule (VI) en présence ou en l'absence d'un solvant avec un silane de formule $HSiCl_aR_b$, où a = (2 ou 3), b = (0 ou 1) et (a+b) = 3 et R représente un reste méthyle ou phényle, à 80 à 160°C, en un diphosphane de formule (VII)

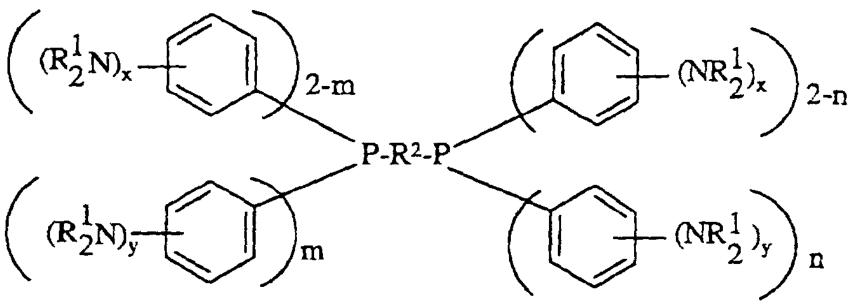

(VII)

et on fait éventuellement réagir le diphosphane de formule (VII) avec un acide de formule $R^3$-A-H où $R^3$ et A ont la signification citée précédemment.

**15.** Procédé selon la revendication 14, **caractérisé en ce que** l'on fait réagir l'oxyde de phosphane de formule (IV) et le dihalogénure X-$R^2$-X dans le rapport molaire 1:(1 à 5) après quoi on fait réagir le produit réactionnel, éventuellement après séparation du dihalogénure utilisé en excès, avec l'oxyde de phosphane de formule (V).

**16.** Procédé selon la revendication 14 ou 15, **caractérisé en ce que** l'on fait réagir le dihalogénure X-$R^2$-X avec l'oxyde de phosphane de formule (IV) ou avec l'oxyde de phosphane de formule (V) dans le rapport molaire 1:(2 à 2,2).

**17.** Procédé selon une ou plusieurs des revendications 14 à 16, **caractérisé en ce que** l'on utilise comme base un composé MeH où Me représente Li, Na ou K, ou un composé LiR' où R' représente un reste alkyle de 1 à 4 atomes de carbone ou un reste phényle.

**18.** Procédé selon une ou plusieurs des revendications 14 à 17, **caractérisé en ce que** l'on réduit l'oxyde de diphosphane de formule (VI) avec un silane de formule $HSiCl_2R$ où R représente un reste méthyle ou un reste phényle, à une température de 100 à 150°C.

**19.** Procédé selon une ou plusieurs des revendications 14 à 18, **caractérisé en ce que** l'on utilise comme solvant l'acétonitrile, le toluène ou le xylène.